# EUROPÄISCHE PATENTANMELDUNG

(11) **EP 0 874 301 A1**
(43) Veröffentlichungstag der Anmeldung: **28.10.1998**
(21) Anmeldenummer: 98106998.2
(22) Anmeldetag: 17.04.1998
(51) Int. Cl.: G06F 1/16

(54) **Tragbarer personal-computer**

(30) Priorität: 22.04.1997 DE 29707173 U
(71) Anmelder: Rohr, Alfred, 22335 Hamburg (DE)
(72) Erfinder: Rohr, Alfred, 22335 Hamburg (DE)

(57) **Zusammenfassung**

Der tragbare Personal - Computer hat gegenüber den existierenden Systemen die Eigenschaft, aus den günstigsten Komponenten zu bestehen und troztdem leicht transportabel zu sein.

Der Computer weist trotz seiner Mobilität keinerlei Beeinträchtigung seiner Funktionen auf. Die so konstruierten Computer zeichnen sich durch einen sehr hohen Gebrauchswert aus.

## Beschreibung

Die Erfindung betrifft ein elektronisches Gerät zur Datenspeicherung, -verarbeitung und -darstellung, allgemein Computer genannt. Speziell die Variante, die für den Gebrauch durch Einzelpersonen konstruiert wurden, algemein Personal - Computer genannt.

Abgesehen von Grossrechnern und Taschenrechnern, die hier nicht weiter betrachtet werden sollen, existieren zur Zeit zwei prinzipiell unterschiedliche Systeme von Computern, Personal - Computer und Laptops/Notebooks. Personal - Computer, kurz PC's genannt, in aller Regel ortsfest, zeichnen sich durch einen hohen Standardisierungsgrad der präfabrizierten Komponenten aus und sind damit sehr kostengünstig. Laptops/Notebooks sind mobil zu nutzen, diese Mobilität wird durch Verwendung von speziell minituarisierten Komponenten erreicht, die etwa um den Faktor ½ kleiner, aber um den Faktor 2-3 teurer sind.

Obwohl beide Systeme hervorragend funktionierende Computer hervorbringen, hat jedes System für sich spezifische Nachteile : die PC's sind immobil aber kostengünstig, Laptops/Notebooks mobil aber teuer.

Ziel der vorgelegten Erfindung ist es, die Vorteile beider Systeme, Mobilität und kostengünstige Standardisierung, zu verbinden

Dies wird erfindungsgemäss erreicht durch :
1) passende, zur Strahlungsabschirmung aluminiumbeschichtete, Koffergehäuse, je nach Ausstattung mit der Minimalgrösse von 320 x 230 x 160 [mm] bis zur Maximalgrösse von 480 x 380 x 190 [mm].
2) geeignete räumliche Anbringung der benötigten Komponenten, mindestens ein Mainboard mit CPU und Cooler, Arbeitsspeicher, Controller, Grafik - Karte, Netzteil und Diskettenlaufwerk, fest installiert, die notwendigen internen und externen Verkabelungen und zur Entnahme vor Gebrauch ein 88 Tasten - Keyboard und eine Maus. 30 Optional, je nach gewünschtem Einsatzumfang, können weitere Komponenten zugefügt werden, wie Sound - Karte, Modem, Netzwerk - Karte, Festplatte, Streamer - Laufwerk, CD - Laufwerk, Flach - Displays, Boxen und Mikrophon, bzw eine Kopfhöhrer/Mikrophonkombination. Ausserdem einen Sicherheitsschalter, der bei anheben der Trennplatte automatisch die Stromzufuhr des Systems unterbricht.
3) angepasste Produktionsmethoden
   a) Verklebung statt Verschraubung
   b) interne Verkabelung statt externer Steckanschlüsse
   c) Verwendung angepasster Kunststoffkomponenten zur Trennung von Installations - und Bedienungsbereichen
   d) Verwendung von angepassten Schaumstoffeinlagen, um die Transportsicherheit herzu - stellen

Die Vorteile der vorgelegten Erfindung zeigen sich im wesentlichen in drei Bereichen :
a) Ein vergleichbar leistungsfähiges System kostet nur etwa 40% des Preises eines Laptops/Notebooks und macht daher mobile Computertechnik auch in den Bereichen möglich, wo ständige Etat - Kürzungen dies bisher unmöglich machte ( etwa öffentliche Schulen, sonstige Ansbildung usw).
b) Durch die Verwendung von Standard - PC - Komponenten und einer Sicherheitstechnik, die erlaubt, einfach an die installierten Komponenten zu gelangen, wird erreicht, dass Reparaturen und Anfrüstung schnell und ohne grossen Aufwand durchgeführt werden können, in vielen Fällen durch den User selbst.
c) Dadurch, dass es sich bei diesem System um einen echten PC handelt, wird erreicht, dass es sowohl zuhause, im Büro und unterwegs eingesetzt werden kann. Damit wird die Nutzung des Computers intensiviert, was letztendlich zur Einsparung von 1 - 2 Computern pro User führen kann, damit nicht nur zu Kosteneinsparungen sondern ach zu Einsparung von Material und Energie, also zu ökologisch sinnvollen Einsparungen.

Bau eines tragbaren PC's am Beispiel eines Billigrechners fur den Gebrauch in einem Klassennetz einer Schule und als Working - Station für Hausaufgaben :

Es wird ein handelsüblicher Koffer mit den beschriebenen Eigenschaften und der Grösse 320 Länge x 230 Breite x 170 Höhe [mm] Innenmass verwendet, wobei die Höhe des Koffers sich folgendermassen aufteilt : das Unterteil hat eine Höhe von 110 [mm], das Oberteil eine solche von 60 [mm]. Ein 2/3 Baby - Mainboard wird ordnungs - gemäss nach verwendeter CPU gejumpert, mit der gewünschten Menge und Art Arbeits - speicher und der CPU sowie einem CPU - Cooler versehen. Die Plastik - Distanzhalter werden an den am Mainboard vorgesehenen Plätzen gesteckt und an der Unterseite mit handelsüblichen Klebepads versehen. Jetzt wird das Mainboard dergestalt in dem Unterteil des Koffers angebracht, dass die PCI - und ISA - Steckplätze quer zur Breite des koffers stehen und die Seite des Mainboards, aufder sich die CPU befindet, mit dem rechten Rand des Koffers abschliesst, wenn sich die geöffnete Seite des Koffers vorn befindet. Ein ca 2 sekündiger, fester Druck stellt die Bindung zwischen Board und Koffer her. Nun wird ein handelsübliches Netzteil (Eingangsspannung 220 V∼/Ausgangsspannungen -5V/+5V/-12V/+12V_/80 - 250 W) mit den Massen 40 x 80 x 180 [mm] dergestalt im Koffer angebracht, dass das Netzteil hochkant unten und am linken Rand des Koffers klebt, wobei die Spannungseingangssteckteile und der Schalter nach vorn, die Nieder - spannungsausgänge nach hinten zeigen. Der Netzteilschalter wird in die linke vordere Ecke des Koffers eingeklebt, in die Zuleitung zwischen Schalter und Netsteil wird der Sicherheitsschalter eingefügt und am linken oberen Rand des Kofferunterteils so befestigt, dass er im offenen Zustand über den Kofferrand hinausragt, im geschlossenen Zustand ca 2mm unter dem Kofferrand abschliesst. Jetzt wird die, aus 2mm Acryl - Glas bestehende. Zwischenplatte mit den Massen 310 x 220 x 2 [mm] mit Scharnieren an der Hinterseite des Koffers so befestigt, dass die Platte mit der Kofferkante abschliesst, wobei an jeder Seite und vorn jeweils ein Plastikauflieger (10 x 5 x 5 [mm] ) angebracht wird. Über dem vorderen Auflieger wird ein Dreh - oder Schiebeverschluss angebracht, der gewährleistet, dass die Trennplatte ihre Lage hält. Das Disketten - und das CD - Laufwerk werden nebeneinander auf der Oberseite der Trennplatte so aufgeklebt, das die Eingabeseiten der Laufwerke mit der Vorderkante der Trennplatte abschliessen. Jetzt wird die Stromversorgung des Mainboards hergestellt, die Grafik - , Sound - und Netzwerkkarte in den Steckplätzen angebracht, die Daten - und Stromversorgungskabel für die Laufwerke angeschlossen. Das Anschlusskabel des Netzteils, sowie die Leitungen von den Karten, der Maus, des Keyboards sowie evtl ein Druckerkabel werden durch ein rundes Loch in der hinteren linken Seite der Trennplatte mit dem Durchmesser von 30 [mm] nach oben geführt. Wenn jetzt die angepassten Schaumstoffeinlagen unten und über der Trennplatte eingelegt werden, die Maus und die Kabel neben den Laufwerken und das Keyboard zwischen Schaumstoffeinlage und oberem Kofferdeckel abgelegt werden, sowie der Koffer geschlossen wird . ist der Computer transportfähig.

## Patentansprüche

1. Tragbarer Personal - Computer,
dadurch gekennzeichnet, dass er sowohl für alle PC - Anwendungen einsetzbar ist, aus kostengünstigen PC - Komponenten besteht, schnell und kostengünstig aufgerüstet und repariert werden kann und trotzdem leicht und sicher transportierbar ist.
